# EUROPÄISCHE PATENTANMELDUNG

(11) **EP 3 098 093 A1**
(43) Veröffentlichungstag der Anmeldung: **30.11.2016**
(21) Anmeldenummer: 16170765.8
(22) Anmeldetag: 23.05.2016
(51) Int. Cl.: B60D 1/167, B60D 1/26

(54) **ZUGGABEL FÜR EIN ANHÄNGERFAHRZEUG**

(30) Priorität: 26.05.2015 DE 102015108229
(71) Anmelder: BPW-Hungária Kft., 9700 Szombathely (HU)
(72) Erfinder: Vozár, János, 9700 Szombathely (HU)
(74) Vertreter: Bungartz Christophersen Partnerschaft mbB Patentanwälte

(57) **Zusammenfassung**

Vorgeschlagen wird eine Zuggabel (1) für ein Anhängerfahrzeug, welche zwecks Verbindung mit einem Zugfahrzeug an ihrem vorderen Ende mit einer Zugöse (2), und an ihrem gegabelten hinteren Ende mit Gelenken (6) versehen ist, die das Schwenken der Zuggabel (1) um eine horizontale Achse ermöglichen, wobei zum zumindest teilweisen Ausgleich des an der Zugöse (2) wirkenden Zuggabelgewichts eine Feder (12) vorhanden ist. Um eine gattungsgemäße Zuggabel, bei der ein Ausgleichen des Zuggabelgewichts über eine Feder und insbesondere eine Schraubenfeder erzielt wird, in Richtung auf die Verwendbarkeit einer für weniger hohe Kräfte ausgelegten Feder zu verbessern, ist ein an der Zuggabel (1) auf einer quer zur Fahrzeuglängsrichtung angeordneten Drehachse (A) gelagertes Hebelelement (9) vorgesehen, welches ober- und/oder unterhalb der Drehachse (A) mit Gelenkpunkten (A1, A2) versehen ist, an denen das eine Ende (16) der Feder (12) und das vordere Ende (26) eines langgestreckten Zug- oder Druckelements (22) festgelegt sind, dessen hinteres Ende (25) ober- oder unterhalb der Gelenke (6) fahrzeug- oder chassisfest festgelegt ist.

## Beschreibung

Die Erfindung betrifft eine Zuggabel für ein Anhängerfahrzeug, welche zwecks Verbindung mit einem Zugfahrzeug an ihrem vorderen Ende mit einer Zugöse, und an ihrem gegabelten hinteren Ende mit Gelenken versehen ist, die das Schwenken der Zuggabel um eine horizontale Achse ermöglichen, wobei zum zumindest teilweisen Ausgleich des an der Zugöse wirkenden Zuggabelgewichts eine Feder vorhanden ist.

Solche Zuggabeln sind bekannt. Sie kommen vor allem bei Anhängerfahrzeugen zum Einsatz, deren Vorderachse zwecks Kurvenfahrt über einen Drehkranz schwenkbar ist. Üblicherweise besteht die Zuggabel aus zwei V-förmig zueinander angeordneten Holmen, die am vorderen Fahrzeugende zwecks Verbindung mit dem Zugfahrzeug mit einer Zugöse versehen sind, wohingegen an dem gegabelten hinteren Ende die Holme in Gelenken enden, die das Schwenken der Zuggabel um eine horizontale Achse ermöglichen.

Vor allem bei schweren Nutzfahrzeuganhängern ist das Gewicht der Zuggabel erheblich. Um diese trotzdem von Hand in die richtige Höhe zum Koppeln mit dem Zugfahrzeug heben zu können, ist ein Lastenausgleich erforderlich. Zu diesem Zweck ist eine Feder vorhanden, deren vorderes Ende an der Zuggabel befestigt ist, wohingegen das hintere Federende an dem Fahrzeug oder am Fahrzeugchassis befestigt ist. Durch die Feder kommt es zu einer dauernden Zugkraft mit der Folge, dass die Zuggabel, soweit diese nicht an ein Zugfahrzeug angekoppelt ist, entweder leicht angehoben bleibt, oder aber ihr an der Zugöse wirkendes Gewicht zumindest so weit reduziert ist, dass sich die Zuggabel ohne zu viel Kraftaufwendung anheben lässt.

Die schräg zu der Zuggabel sich erstreckende Feder kann ihre Aufgabe nur erfüllen, wenn sie ganz erhebliche Kräfte aufnehmen kann. Solche Federn und insbesondere Schraubenfedern sind teuer in der Herstellung, und daher auch teuer für den Fahrzeugbauer. In diesem Zusammenhang ist zu berücksichtigen, dass der Preis derartiger Federn nicht linear, sondern exponentiell zu den Federkräften ansteigt, für die die Federn ausgelegt sind.

Der Erfindung liegt die **Aufgabe** zugrunde, eine gattungsgemäße Zuggabel, bei der ein Ausgleichen des Zuggabelgewichts über eine Feder und vorzugsweise eine Schraubenfeder erzielt wird, in Richtung auf die Verwendbarkeit einer für weniger hohe Kräfte ausgelegten Feder zu verbessern.

Zur **Lösung** dieser Aufgabe wird eine Zuggabel mit den Merkmalen des Patentanspruchs 1 vorgeschlagen.

Diese Zuggabel ist gekennzeichnet durch ein auf einer quer zur Fahrzeuglängsrichtung angeordneten Drehachse gelagertes Hebelelement, welches ober- und/oder unterhalb der Drehachse mit Gelenkpunkten versehen ist, an denen das eine Ende der Feder und das vordere Ende eines langgestreckten Zug- oder Druckelements festgelegt sind, wobei das hintere Ende des Zug- oder Druckelements ober- oder unterhalb der Gelenke fahrzeug- oder chassisfest festgelegt ist.

Durch diese Bauweise der Zuggabel wird eine Kräfteaufteilung erzielt, bei der die Feder, bei ansonsten unveränderter Zuggabel, weniger hohe Kräfte aufnehmen muss bzw. umgekehrt für weniger hohe Kräfte ausgelegt werden muss. Dies ermöglicht den Einsatz einer deutlich preiswerteren Feder ohne Nachteile hinsichtlich des Ausgleichs des an der Zugöse wirkenden Zuggabelgewichts. Die Feder kann eine auf Zug oder eine auf Druck arbeitende Feder sein.

Ausgestaltungen der erfindungsgemäßen Zuggabel sind in den Unteransprüchen angegeben.

Bei einer ersten Ausgestaltung ist an einem ersten Gelenkpunkt das eine Ende der Feder, und an einem zweiten Gelenkpunkt das vordere Ende des Zug- oder Druckelements festgelegt, wobei sich die beiden Gelenkpunkte in unterschiedlicher Höhe an dem Hebelelement befinden, oder in unterschiedlichen Abständen zur Drehachse des Hebelelements.

Das andere Ende der Feder kann fahrzeug- oder chassisfest festgelegt sein. Jedoch ist auch eine Ausgestaltung möglich, bei der das andere Ende der Feder an der Zuggabel festgelegt ist.

Gemäß einer weiteren Ausgestaltung sind in den Gelenkpunkten das Ende der Feder und das vordere Ende des Zug- oder Druckelements über einen Stift oder Bolzen an dem Hebelelement festgelegt. Vorzugsweise ist das Hebelelement im Bereich der Gelenkpunkte mit mehreren Löchern versehen. Auf diese Weise ist der Stift bzw. der Bolzen wahlweise in eines dieser Löcher einsetzbar, um so eine Einstellung der an der Zuggabel wirkenden Anhebekraft zu ermöglichen. Auf diese Weise lassen sich auch Änderungen des Zuggabelgewichts kompensieren, wie sie etwa durch zusätzliche Anbauteile an der Zuggabel entstehen können.

Vorzugsweise ist die wirksame Länge der Feder einstellbar, um auch so die Gewichtskompensation anwendungsspezifisch justieren zu können. Alternativ oder zusätzlich besteht die Möglichkeit, dass auch die Länge des Zug- oder Druckelements einstellbar ist.

Bei einer bevorzugten Ausführungsform der Zuggabel ist ein Gelenkpunkt oberhalb, und der andere Gelenkpunkt unterhalb der Drehachse an dem Hebelelement angeordnet.

Bevorzugt ist ferner eine Ausführungsform, bei der sowohl das andere Ende der Feder als auch das hintere Ende des Zug- oder Druckelements oberhalb der Gelenke angeordnet sind. Vorzugsweise ist das andere Ende der Feder und das hintere Ende des Zug- oder Druckelements an einem gemeinsamen Ort fahrzeug- oder chassisfest festgelegt, was die Konstruktion vereinfacht.

Das Zugelement kann, sofern nur Zugkräfte auftreten, z. B. ein Seil sein. Ist das Element hingegen auf Druck belastet, kommt eine Druckstange als Druckelement zum Einsatz.

Bei einer bevorzugten Ausführungsform kommt als Zugelement eine Gliederkette zum Einsatz. In diesem Fall ist es von Vorteil, wenn die Feder im Bereich ihres anderen, also ihres hinteren Endes, in ein Kettenglied dieser Gliederkette eingehängt ist, wodurch sich die Konstruktion vereinfacht.

Weitere Einzelheiten und Vorteile ergeben sich aus der nachfolgenden Beschreibung mehrerer auf der Zeichnung dargestellter Ausführungsbeispiele. Im Einzelnen zeigen:
- Fig. 1: zur Erläuterung des Standes der Technik eine Zuggabel für ein Anhängerfahrzeug, wie sie häufig im Einsatz ist;
- Fig. 2: in zu Fig. 1 vergleichbarer Draufsicht eine erfindungsgemäße Zuggabel;
- Fig. 3: eine seitliche Detailansicht der erfindungsgemäßen Zuggabel entsprechend der in Fig. 2 eingetragenen Ansichtsebene III-III;
- Fig. 4: eine der Fig. 3 vergleichbare Ansicht, jedoch bei einer zweiten erfindungsgemäßen Ausführungsform der Zuggabel;
- Fig. 5: eine der Fig. 3 vergleichbare Ansicht, jedoch bei einer dritten erfindungsgemäßen Ausführungsform der Zuggabel;
- Fig. 6: eine der Fig. 3 vergleichbare Ansicht, jedoch bei einer vierten erfindungsgemäßen Ausführungsform der Zuggabel;
- Fig. 7: eine der Fig. 3 vergleichbare Ansicht, jedoch bei einer fünften erfindungsgemäßen Ausführungsform der Zuggabel und
- Fig. 8: eine der Fig. 3 vergleichbare Ansicht, jedoch bei einer fünften erfindungsgemäßen Ausführungsform der Zuggabel.

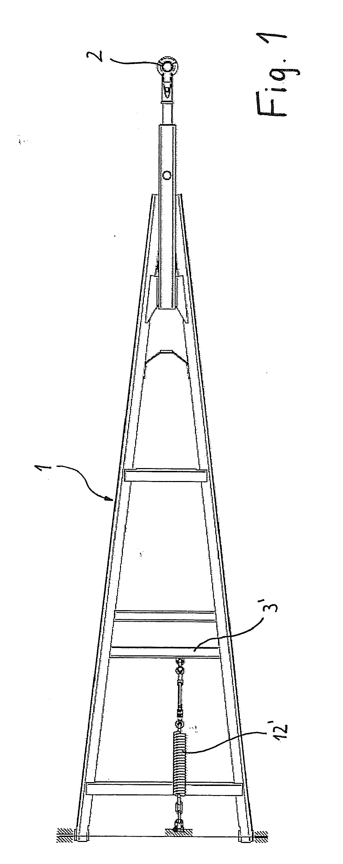

Die Figur 1 zeigt in Draufsicht eine Zuggabel nach dem Stand der Technik. Zum zumindest teilweisen Ausgleich des an der Zugöse 2 der Zuggabel wirkenden Zuggabelgewichts ist eine Feder 12' vorhanden. Das in Fahrzeugrichtung vordere Ende der Feder 12' ist an einem Querträger 3' der Zuggabel befestigt, hingegen das in Fahrzeugrichtung hintere Ende entweder an dem Fahrzeug oder am Fahrzeugchassis. Dieser hintere Befestigungspunkt liegt deutlich höher als die Zuggabel, wodurch die Feder 12' eine schräg nach oben gerichtete Zugkraft auf die Zuggabel ausübt. Durch diese Federkraft wird der an der Zugöse 2 wirkende Gewichtsanteil des Zuggabelgewichts reduziert, so dass diese leichter von Hand angehoben werden kann. Damit die als Schraubenfeder ausgebildete Feder 12' diese Aufgabe erfüllen kann, ist sie sehr stark ausgebildet mit der Folge relativ hoher Beschaffungskosten für eine solche Feder.

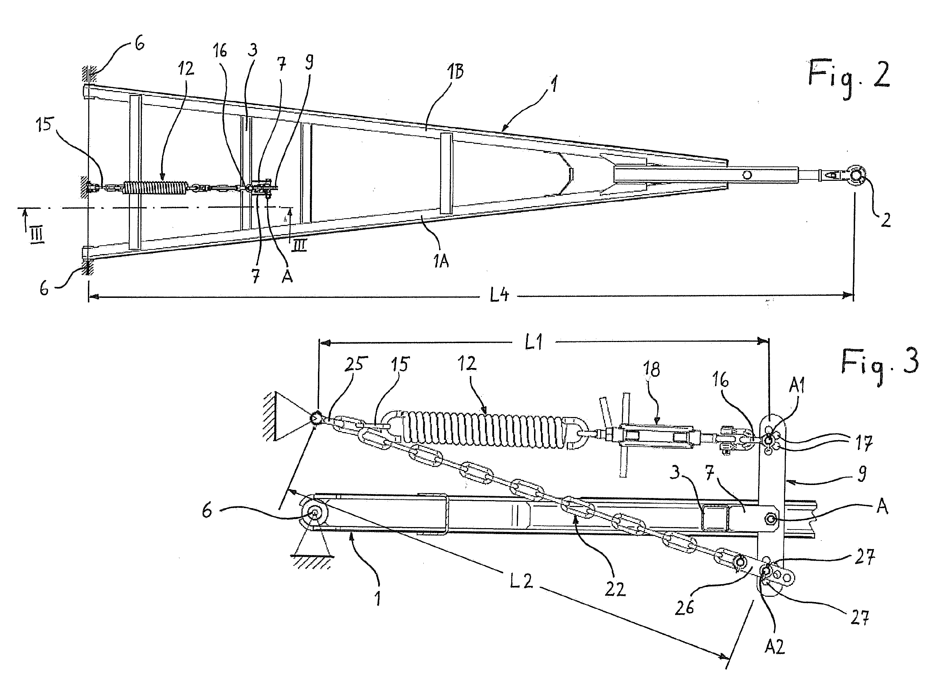

Demgegenüber ist in den Figuren 2 und 3 ist eine erfindungsgemäße Zuggabel 1 in einer ersten Ausführungsform wiedergegeben. Die Zuggabel 1 besteht im Wesentlichen aus zwei Holmen 1A, 1 B, die hier V-förmig zueinander angeordnet sind. Die Zuggabel ist überlang, denn ihre Länge L4 beträgt in etwa das 4,5-fache ihrer maximalen Breite. An dem in Fahrzeuglängsrichtung vorderen Ende, an dem die Holme 1A, 1B aufeinander zulaufen, ist die Zugöse 2 zur Verbindung mit dem Zugfahrzeug befestigt. An dem in Fahrzeuglängsrichtung hinteren Ende, an dem sich die Holme gabeln bzw. sie aufspreizen, ist jeder Holm 1A, 1B mit einem Gelenk 6 mit horizontaler, quer zur Fahrzeuglängsrichtung angeordneter Achse versehen. Über das Gelenk 6 ist die Schwenkverbindung zum Fahrzeugchassis hergestellt. Auf diese Weise ist das Schwenken der Zuggabel 1 um die Gelenke 6 herum möglich.

Bestandteil der Zuggabel 1 sind außerdem mehrere Querträger, welche die beiden Holme 1A, 1 B starr miteinander verbinden und die Zuggabel insgesamt aussteifen.

An einem Querträger 3, welcher sich auf ca. einem Viertel der Gesamtlänge der Zuggabel 1 befindet, ist ein Hebelelement 9 auf einer quer zur Fahrzeuglängsrichtung angeordneten Drehachse A gelagert. Zur Aufnahme dieser Drehachse A sind zu beiden Seiten des Hebelelements 9 Flansche 7 an dem Querträger 3 befestigt, vorzugsweise durch Verschweißen mit dem Querträger 3. Die beiden Flansche 7 erstrecken sich parallel zueinander in Fahrzeuglängsrichtung, so dass sie gemeinsam die Drehachse A aufnehmen, und sich das Hebelelement 9 zwischen den beiden Flanschen 7 befindet.

Die Drehachse A erstreckt sich horizontal quer zur Fahrzeuglängsrichtung. Ihr Längsabstand zu den Gelenken 6 beträgt weniger als ein Drittel und vorzugsweise sogar weniger als ein Viertel der Gesamtlänge L4 der Zuggabel.

Bei der Ausführungsform nach den Figuren 2 und 3 setzt sich, wie vor allem Figur 3 erkennen lässt, das Hebelelement 9 aus einem oberhalb der Drehachse A liegenden oberen Hebelarm und einem unterhalb der Drehachse A liegenden unteren Hebelarm zusammen. Die Drehachse A wird vorzugsweise durch einen Bolzen gebildet, um den das Hebelelement 9 verschwenkbar ist. An dem oberen Hebelarm befindet sich ein erster Gelenkpunkt A1, an dem unteren Hebelarm ein zweiter Gelenkpunkt A2.

An dem ersten Gelenkpunkt A1 ist das in Fahrzeugrichtung vordere Ende 16 einer einzelnen Feder 12 gelenkig befestigt. Das andere, also das in Fahrzeugrichtung hintere Ende 15 dieser Feder 12 ist oberhalb der Gelenke 6 fahrzeug- oder chassisfest festgelegt.

An dem zweiten Gelenkpunkt A2 ist das in Fahrzeugrichtung vordere Ende 26 einer Gliederkette befestigt. Das in Fahrzeugrichtung hintere Ende 25 der Gliederkette ist fahrzeug- oder chassisfest festgelegt, und zwar oberhalb der Gelenke 6. Die Gliederkette verhält sich in Bezug auf Zugkräfte starr, und übernimmt daher die Aufgabe eines Zugelements 22.

Bei der Ausführungsform nach den Figuren 2 und 3 befinden sich das hintere Ende 15 der Feder 12 und das hintere Ende 25 der Gliederkette im Wesentlichen am selben Ort, was die Befestigung vereinfacht. Zu diesem Zweck ist die Feder 12 mit ihrem hinteren Ende 15 in ein Kettenglied, vorzugsweise in das hinterste Kettenglied der Gliederkette, eingehängt.

Durch die Geometrie aus Feder 12, Hebelelement 9 und Zugelement 22 wird ein zumindest teilweiser Ausgleich des an der Zugöse 2 der Zuggabel 1 wirkenden Anteils des Zuggabelgewichts erzielt. Dafür reicht bereits eine Feder und insbesondere Schraubenfeder 12 aus, die für deutlich geringere Kräfte ausgelegt ist, als die gemäß Fig. 1 beim Stand der Technik verwendete Feder 12'.

Zur Justierung der Gewichtskompensation der Zuggabel sind drei verschiedene Maßnahmen getroffen.

Als erste Maßnahme ist die wirksame Länge L1 der Schraubenfeder 12 einstellbar. Diese Einstellung erfolgt über ein in Reihe zu dem Federelement der Feder 12 geschaltetes, längsverstellbares Spannschloss 18.

Als zweite Maßnahme ist die Länge L2 des Zug- oder Druckelements 22 einstellbar.

Als dritte Maßnahme zur Justierung des Gewichtsaugleichs ist das Hebelelement 9 zur Realisierung der Gelenkpunkte A1, A2 mit mehreren Löchern 17, 27 zum wahlweisen Einsetzen eines Stifts oder Bolzens versehen, der die Feder bzw. das Zug- oder Druckelement 22 mit dem Hebelelement 9 verbindet. Bei dem Ausführungsbeispiel nach Figur 3 stehen sowohl am oberen Hebelarm als auch am unteren Hebelarm jeweils fünf Löcher 17 bzw. 27 zur Verfügung, um dort den den ersten Gelenkpunkt A1 bzw. den zweiten Gelenkpunkt A2 bildenden Stift oder Bolzen einzusetzen. Die Variation der Löcher 17, 27 führt teils zu einer Änderung der wirksamen Länge der Feder bzw. des Zug- oder Druckelements, teils auch zu einer Veränderung der wirksamen Hebellänge des Hebelarms zwischen erstem Gelenkpunkt A1 und Drehachse A, und des Hebelarms zwischen zweitem Gelenkpunkt A2 und der Drehachse A.

Die Feder 12 ist eine Zugfeder. Sie ist mit ihrem vorderen Ende an dem oberen Hebelarm, und die Gliederkette ist mit ihrem vorderen Ende 26 an dem unteren Hebelarm des Hebelelements 9 gelenkig festgelegt.

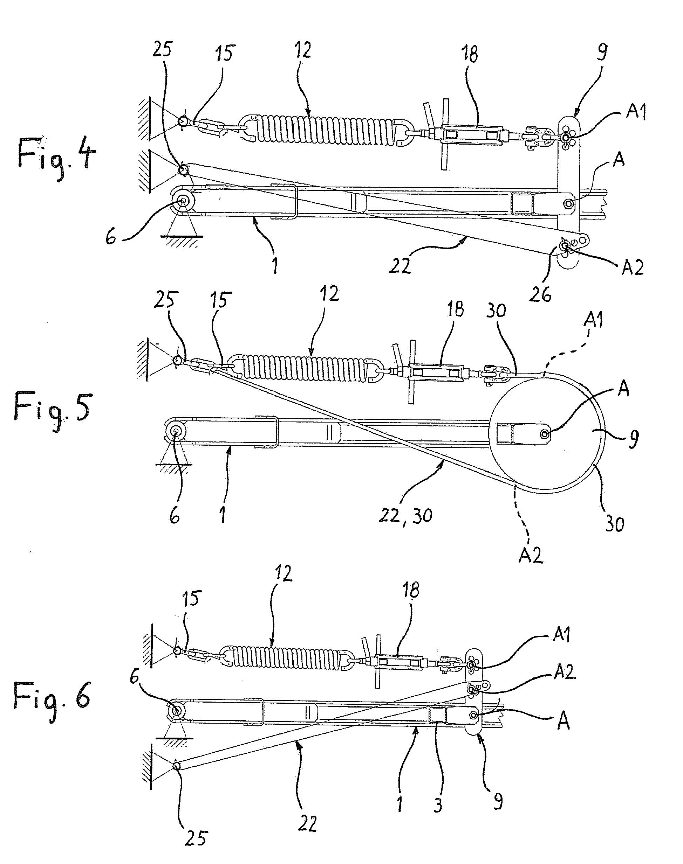

In Figur 4 ist eine zweite Ausführungsform wiedergegeben, bei der anstelle einer Gliederkette eine Druckstange vorhanden ist. Diese bildet daher ein Druckelement 22, und nicht, wie bei der Ausführungsform nach Figur 2 und 3, ein Zugelement 22. Das Druckelement 22 ist mit seinem in Fahrzeuglängsrichtung hinteren Ende 25 nicht an demselben Ort festgelegt wie die Schraubenfeder 12. Stattdessen liegt diese fahrzeugfeste Befestigung etwas tiefer, jedoch höher als die Position der Gelenke 6.

Bei der in Figur 5 wiedergegebenen, dritten Ausführungsform ist das Hebelelement 9 eine auf der Drehachse A gelagerte, runde Seilscheibe. Ein Seil 30 ist um etwas mehr als 180° um diese Scheibe geführt. Das eine Ende des Seils 30 ist mit dem vorderen Ende der Feder 12 verbunden, das andere Ende mit dem Fahrzeugchassis, und zwar oberhalb der Gelenke 6. Durch die Seilumschlingung kommt es zu keiner Relativdrehung zwischen dem scheibenförmigen Hebelelement 9 und dem Seil 30. Der obere Gelenkpunkt A1 ist in diesem Fall jener Ort auf dem Umfang des Hebelelements 9, an dem der von der Feder 12 kommende Seilabschnitt auf das scheibenförmige Hebelelement 9 aufläuft. Umgekehrt ist der untere Gelenkpunkt A2 jener Ort, an dem der zu dem Fahrzeugchassis führende Seilabschnitt von dem scheibenförmigen Hebelelement 9 abläuft.

Bei der in Figur 6 wiedergegebenen, vierten Ausführungsform ist das Hebelelement 9 so gestaltet, dass sich sowohl der erste Gelenkpunkt A1, als auch der zweite Gelenkpunkt A2 über der Drehachse A des Hebelelements befinden. Dabei befindet sich der erste Gelenkpunkt A1 für die Schraubenfeder 12 über dem zweiten Gelenkpunkt A2 für das hier als Druckstange ausgebildete Druckelement 22. Dieses ist mit seinem hinteren Ende 25 gegen das Fahrzeugchassis abgestützt, und zwar an einer Position unterhalb der Gelenke 6.

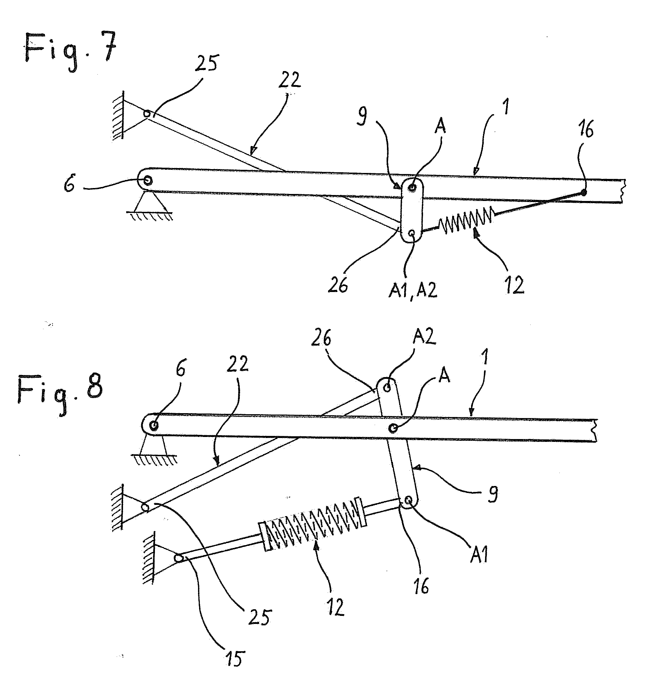

Bei der in Figur 7 wiedergegebenen, fünften Ausführungsform ist das Hebelelement 9 einarmig, wobei der erste Gelenkpunkt A1 und der zweite Gelenkpunkt A2 in einem Ort zusammenfallen und sich beide unterhalb der Drehachse A befinden. An dem so gemeinsamen Gelenkpunkt A1, A2 ist das hintere Ende der Schraubenfeder 12 ebenso angelenkt wie das vordere Ende 26 des als Druckstange ausgebildeten Druckelements 22. Das in Fahrzeuglängsrichtung vordere Ende der Feder 12 ist in diesem Fall an der Zuggabel 1 festgelegt, z. B. an einem weiteren Querträger dieser Zuggabel. Das in Fahrzeuglängsrichtung hintere Ende des Druckelements 22 ist wiederum am Fahrzeugchassis oder am Fahrzeug festgelegt, und zwar oberhalb der Gelenke 6.

Bei der in Figur 8 wiedergegebenen, sechsten Ausführungsform ist das Hebelelement 9 zweiarmig ausgebildet, wobei der erste Gelenkpunkt A1 unter und der zweite Gelenkpunkt A2 über der Drehachse A liegt. An dem unteren Gelenkpunkt A1 ist das vordere Ende der Feder 12 angelenkt, die hier allerdings als Druckfeder ausgebildet ist und auf Druck und nicht auf Zug arbeitet. Das hintere Ende 25 der Druckfeder 12 ist am Chassis festgelegt. Am oberen Gelenkpunkt A2 ist das vordere Ende des als Druckstange ausgebildeten Druckelements 22 angelenkt. Das in Fahrzeuglängsrichtung hintere Ende 25 des Druckelements 22 ist wiederum am Fahrzeugchassis oder am Fahrzeug festgelegt, hier in einer Position unterhalb der Gelenke 6.

### Bezugszeichenliste

- 1: Zuggabel
- 1A: Holm
- 1B: Holm
- 2: Zugöse
- 3: Querträger
- 3': Querträger
- 6: Gelenke
- 7: Flansch
- 9: Hebelelement
- 12: Feder
- 12': Feder
- 15: hinteres Ende der Feder
- 16: vorderes Ende der Feder
- 17: Loch
- 18: Spannschloss
- 22: Zug- oder Druckelement
- 25: hinteres Ende
- 26: vorderes Ende
- 27: Loch
- 30: Seil
- A: Drehachse
- A1: erster Gelenkpunkt
- A2: zweiter Gelenkpunkt
- L1: Länge
- L2: Länge
- L4: Länge Zuggabel

## Patentansprüche

1. Zuggabel (1) für ein Anhängerfahrzeug, welche zwecks Verbindung mit einem Zugfahrzeug an ihrem vorderen Ende mit einer Zugöse (2), und an ihrem gegabelten hinteren Ende mit Gelenken (6) versehen ist, die das Schwenken der Zuggabel (1) um eine horizontale Achse ermöglichen, wobei zum zumindest teilweisen Ausgleich des an der Zugöse (2) wirkenden Zuggabelgewichts eine Feder (12) vorhanden ist, **gekennzeichnet durch** ein an der Zuggabel (1) auf einer quer zur Fahrzeuglängsrichtung angeordneten Drehachse (A) gelagertes Hebelelement (9), welches ober- und/oder unterhalb der Drehachse (A) mit Gelenkpunkten (A1, A2) versehen ist, an denen das eine Ende (16) der Feder (12) und das vordere Ende (26) eines langgestreckten Zug- oder Druckelements (22) festgelegt sind, dessen hinteres Ende (25) ober- oder unterhalb der Gelenke (6) fahrzeug- oder chassisfest festgelegt ist.

2. Zuggabel nach Anspruch 1, **gekennzeichnet durch** einen ersten Gelenkpunkt (A1), an dem das eine Ende (16) der Feder (12), und einen zweiten Gelenkpunkt (A2), an dem das vordere Ende (26) des Zug- oder Druckelements (22) festgelegt ist, wobei sich die beiden Gelenkpunkte (A1, A2) in unterschiedlicher Höhe an dem Hebelelement (9) befinden.

3. Zuggabel nach Anspruch 2, **dadurch gekennzeichnet, dass** das andere Ende (15) der Feder (12) fahrzeug- oder chassisfest festgelegt ist.

4. Zuggabel nach einem der Ansprüche 1 - 3, **dadurch gekennzeichnet, dass** in den Gelenkpunkten (A1, A2) das Ende (16) der Feder (12) und das vordere Ende (26) des Zug- oder Druckelements (22) über einen Stift oder Bolzen an dem Hebelelement (9) festgelegt sind.

5. Zuggabel nach Anspruch 4, **dadurch gekennzeichnet, dass** das Hebelelement (9) im Bereich der Gelenkpunkte (A1, A2) mit mehreren Löchern (17, 27) zum wahlweisen Einsetzen des Stifts oder Bolzens versehen ist.

6. Zuggabel nach einem der vorangehenden Ansprüche, **dadurch gekennzeichnet, dass** die wirksame Länge (L1) der Feder (12) einstellbar ist.

7. Zuggabel nach einem der vorangehenden Ansprüche, **dadurch gekennzeichnet, dass** die Länge (L2) des Zug- oder Druckelements (22) einstellbar ist.

8. Zuggabel nach einem der vorangegangenen Ansprüche, **dadurch gekennzeichnet, dass** ein Gelenkpunkt (A1) oberhalb, und der andere Gelenkpunkt (A2) unterhalb der Drehachse (A) an dem Hebelelement (9) angeordnet ist.

9. Zuggabel nach einem der vorangehenden Ansprüche, **dadurch gekennzeichnet, dass** sowohl das andere Ende (15) der Feder (12) als auch das hintere Ende (25) des Zug- oder Druckelements (22) oberhalb der Gelenke (6) angeordnet sind.

10. Zuggabel nach Anspruch 9, **dadurch gekennzeichnet, dass** das andere Ende (15) der Feder (12) und das hintere Ende (25) des Zug- oder Druckelements (22) an einem gemeinsamen Ort fahrzeug- oder chassisfest festgelegt sind.

11. Zuggabel nach Anspruch 9 oder 10, **gekennzeichnet durch** ein Seil (30) als Zugelement (22).

12. Zuggabel nach Anspruch 9 oder 10, **gekennzeichnet durch** eine Gliederkette als Zugelement (22).

13. Zuggabel nach Anspruch 12 in Verbindung mit Anspruch 9, **dadurch gekennzeichnet, dass** die Feder (12) im Bereich ihres anderen Endes (15) in ein Kettenglied der Gliederkette eingehängt ist.

14. Zuggabel nach einem der vorangehenden Ansprüche, **dadurch gekennzeichnet, dass** in Fahrzeuglängsrichtung der Abstand der Drehachse (A) von den Gelenken (6) weniger als ein Drittel, vorzugsweise weniger als ein Viertel der Länge (L4) der Zuggabel beträgt.
